**Europäisches Patentamt**

**European Patent Office**

**Office européen des brevets**

(19)

(11) Veröffentlichungsnummer : **0 154 709**
**B1**

(12) **EUROPÄISCHE PATENTSCHRIFT**

(45) Veröffentlichungstag der Patentschrift :
02.03.88

(51) Int. Cl.⁴ : **B 23 K 20/10**

(21) Anmeldenummer : **84115571.6**

(22) Anmeldetag : **17.12.84**

(54) Werkzeug einer Ultraschallschweissvorrichtung für metallische Werkstücke.

(30) Priorität : **29.02.84 DE 3407462**

(43) Veröffentlichungstag der Anmeldung :
**18.09.85 Patentblatt 85/38**

(45) Bekanntmachung des Hinweises auf die Patenterteilung : **02.03.88 Patentblatt 88/09**

(84) Benannte Vertragsstaaten :
**DE FR GB NL**

(56) Entgegenhaltungen :
**PATENT ABSTRACTS OF JAPAN, Band 7, Nr. 85, 9. April 1983, Seite (M-206) (1230)**
**SOVIET INVENTIONS ILLUSTRATED, Derwent Publications Ltd., Woche K 43, 4. Dezember 1983, Sektion Chemical, L03, Zusammenfassung Nr. 83-800117/43**
**WERKSTATT UND BETRIEB, Band 114, Heft 7, 1981, München; F.W. NIEBUHR "Ultraschall-Metallschweiβen", Seiten 441-443**
**SOVIET INVENTIONS ILLUSTRATED, Derwent Publications LTD., Woche K 46, 28. Dezember 1983 Sektion Chemical, M23, Zusammenfassung Nr. 83-819329/46 & SU-A-990 459 (MINSK MEDICAL INST.) 28-01-1983**

(73) Patentinhaber : **Siemens Aktiengesellschaft Berlin und München**
**Wittelsbacherplatz 2**
**D-8000 München 2 (DE)**

(72) Erfinder : **Moll, Helmut**
**Haselhofstrasse 32**
**D-8520 Erlangen-Tennenlohe (DE)**

**Beschreibung**

Die Erfindung bezieht sich auf das Werkzeug einer Ultraschallschweißvorrichtung für metallische Werkstücke, insbesondere zum Verbinden von Drähten und/oder Litzen, gemäß dem Oberbegriff des Patentanspruches 1.

Die Ultraschallverschweißung von metallischen Werkstücken, insbesondere auch von Drähten und/oder Litzen ist vom Stand der Technik vorbekannt. Übliche Ultraschallschweißgeräte haben neben dem eigentlichen Schallerzeugungssystem jeweils als aktive Elektrode eine sogenannte Sonotrode zur Übertragung der Ultraschallschwingungen und als passive Elektrode einen sogenannten Amboß, welche die Werkzeuge für die zu verschweißenden Teile bilden. Aus der EP-A1-0 083 707 (DE-A1-31 51 151) ist eine Vorrichtung dieser Art speziell zum Verbinden zweier metallischer Leiter bekannt, bei der die Sonotrode an ihrer Umfangsfläche zumindest eine den zu verbindenden Leitern angepaßte Ausnehmung aufweist, die von einer Sonotrodenrandfläche ausgeht, entlang der eine, einen der Ausnehmung angepaßten Vorsprung aufweisende Fläche des Ambosses verschiebbar ist. Dabei bildet in der die Leiter verbindenden Stellung von Sonotrode und Amboß die Ausnehmung und der zugeordnete Vorsprung eine parallel oder nahezu parallel zur Sonotrodenschwingungsachse verlaufende, an seinen Stirnseiten zum Durchführen der Leiter geöffneten, einen Verdichtungsraum darstellenden Hohlraum. Weiterhin sollen Vorsprung und Ausnehmung derart aufeinander abgestimmt sein, daß durch Wechselwirkung von Sonotrode und Amboß die Verschweißung der metallischen Leiter erfolgen kann.

Bei obigem Stand der Technik wird als vorteilhaft angesehen, daß die zu verbindenden Leiter nur noch in den Verdichtungsraum eingebracht zu werden brauchen, um sie anschließend verbinden zu können. Nachteilig ist allerdings bei einer Vorrichtung mit derart ausgebildeter Sonotrode, daß deren Handhabung zusammen mit dem zugehörigen Amboß gemeinsam mit der gesamten Schweißvorrichtung noch relativ umständlich ist. Bei konkreter Realisierung eines solchen Gerätes besteht die als Schweißzange bezeichnete Vorrichtung aus einem Chassis, auf dem einerseits das Schwingungssystem mit Wandler, Sonotrode und gegebenenfalls einem Transformationsstück (Booster) und andererseits der Amboß gelagert ist. Dabei wird speziell der Amboß in einem Schwenk- oder Drehlager geführt, da die Realisierung einer Schwenkbewegung leichter zu beherrschen ist als eine Parallelverschiebung. Die Lagereinrichtungen machen insgesamt einen vergleichsweise voluminösen und schwergewichtigen Aufbau der Vorrichtung notwendig.

Bei dem bekannten Gerät läßt es sich daher nicht vermeiden, daß die gesamte Vorrichtung jeweils für den Verschweißvorgang ortsfest abgestellt werden muß, um die zu verbindenden Leiter achsenparallel zur Sonotrode in den zugehörigen Verdichtungsraum einzuführen.

Weiterhin wird in der Zeitschrift « Werkstatt und Betrieb », 114 (1981), Seiten 441 bis 443 das Ultraschall-Metallschweißen beschrieben, wofür insbesondere die Sonotrode als aktives Werkzeug einen Sonotrodenkopf mit im wesentlichen rechteckförmigem Querschnitt aufweist, der auf die auf dem Amboß liegenden Werkstücke abgesenkt wird. Derartige Werkzeuge sind nur im Zusammenhang mit stationären Ultraschallschweißanlagen verwendbar ; auf die Konzipierung von leichtgewichtigen, transportablen Einrichtungen, die auch als Handgerät verwendbar sein könnten, wird dort nicht eingegangen.

Aufgabe vorliegender Erfindung ist es demgegenüber, bei dem Werkzeug aus Sonotrode und Amboß weitere Verbesserungen zu schaffen, so daß eine Ultraschallschweißvorrichtung aufgebaut werden kann, die so kompakt und leichtgewichtig ist, daß sie für eine Verwendung an wechselnden Einsatzorten und manuelle Handhabung geeignet ist.

Die Aufgabe ist erfindungsgemäß durch die Gesamtheit der Merkmale des Patentanspruches 1 gelöst. Dabei beinhaltet das Kennzeichen die gegenüber der EP-A1-0 083 707 neuen Merkmale. Vorteilhafte Weiterbildungen sind in den Unteransprüchen angegeben, die teilweise auf die einzelnen Ausführungsbeispiele abgestellt sind.

Mit der Erfindung kann nunmehr eine Ultraschallschweißvorrichtung geschaffen werden, die besonders kompakt und als variables Handgerät einsetzbar ist. Dabei ist besonders vorteilhaft, daß der Amboß weitgehend mittig zur Sonotrodenachse und damit zur Achse der gesamten Schwingungseinheit geführt wird. Neben einer konstruktiven Vereinfachung für die Lagerung und den Verschiebemechanismus ist dabei auch erreicht, daß störende Drehmomente verringert sind. Insgesamt kann dadurch der Aufbau der gesamten Ultraschallschweißvorrichtung aus Schwingungssystem, Amboß und Handhabungseinrichtung kompakter und leichtgewichtiger als beim Stand der Technik gehalten werden. Ein so realisiertes Gerät ist als Handgerät für einen flexiblen Betrieb an wechselnden Einsatzorten geeignet.

Obwohl sich beim erfindungsgemäßen Werkzeug die Ausnehmung in der Sonotrodenstirnfläche als Vertiefung unterschiedlich ausbilden läßt, ergeben sich dadurch, daß der Verdichtungsraum von der Sonotrodenstirnfläche, also einer Fläche senkrecht zur Schwingungsrichtung, begrenzt wird, in Verbindung mit dem Amboß wesentliche Verbesserung für den betriebsmäßigen Gebrauch. Die gesamte Vorrichtung läßt sich an wechselnden Einsatzorten nach Art einer Bohrmaschine handhaben, da sich die Stirnfläche des Sonotrodenkopfes wesentlich leichter positionieren läßt als die Umfangsfläche.·

Es zeigen

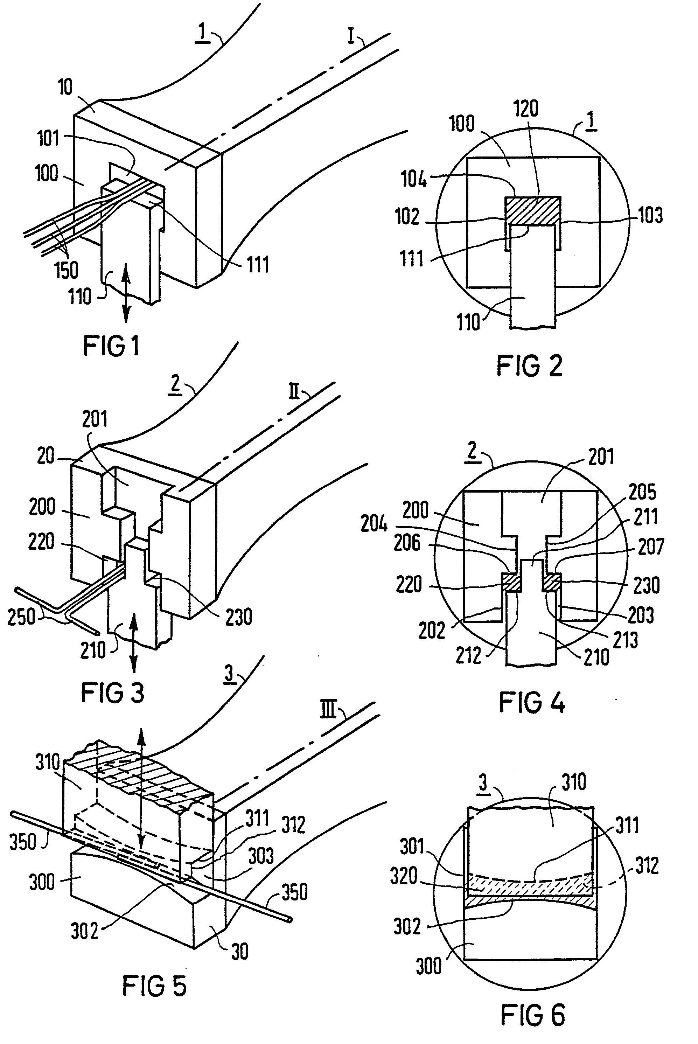

Fig 1/2, Fig 3/4 und Fig 5/6 drei unterschiedliche Ausführungsformen des erfindungsgemäßen Werkzeuges.

In der Zeichnung stellen dabei Fig 1, Fig 3, und Fig 5 jeweils eine perspektivische Darstellung der Sonotrode und Fig 2, Fig 4 und Fig 6 jeweils eine Draufsicht auf die Sonotrodenstirnfläche dar, wobei der zugehörige Amboß jeweils als austauschbarer Schieber angedeutet ist.

In Fig 1 und Fig 2 ist der proximale Abschnitt eines Sonotrodenkörpers mit 1 bezeichnet, welcher üblicherweise etwa rundzylindrisch ausgebildet ist und einen Sonotrodenkopf 10 trägt, der als flacher Quader mit quadratischer Grundfläche ausgeformt ist. Die Sonotrode 1 weist eine Symmetrieachse I auf, welche die Schwingungsachse darstellt. Die Stirnfläche des Sonotrodenkopfes 10 ist mit 100 bezeichnet.

In der Sonotrodenstirnfläche 100 ist eine Aussparung 101 eingebracht. Die Aussparung 101 verläuft kantenparallel zum Sonotrodenkopf 10 und wird seitlich von Flächen 102 und 103 abgeschlossen, zwischen denen ein Amboß 110 geführt ist. Der Amboß 110 hat im Querschnitt ein L-förmiges Profil und ist mit seinen Maßen derart auf die Aussparung 101 abgestimmt, daß er darin mit seinem Ansatzteil verschiebbar ist. Letzteres wird nach oben durch die Fläche 111 begrenzt.

Die Aussparung 101 der Sonotrodenstirnfläche 100 wird durch eine obere Wand 104 abgeschlossen, welche als eine Arbeitsfläche für die Ultraschallverschweißung wirkt ; die andere Arbeitsfläche wird durch die obere Fläche 111 des Ambosses 110 gebildet.

Von der im Bereich der Ausnehmung 101 zurückversetzten Sonotrodenstirnfläche wird also ein von fünf Flächen begrenzter Verdichtungsraum 120 gebildet, in den die Enden von Drähten und/oder Litzen 150 eingebracht werden. Durch Druckausübung bei Verschiebung des Ambosses 110 sowie gleichzeitiger Ultraschallübertragung über die Sonotrodenarbeitsfläche 104 in Richtung der Symmetrieachse I lassen sich in bekannter Weise durch die erzeugten Reibkräfte die Verschweißwirkungen erzielen. Damit wird eine dauerhafte Verbindung der Leitungsenden erreicht.

In Fig 3 und Fig 4 ist ein Sonotrodenkörper 2 mit Symmetrieachse und Sonotrodenkopf 20 im wesentlichen entsprechend dem ersten Ausführungsbeispiel aufgebaut.

An der Sonotrodenstirnfläche 200 ist nun aber eine durchlaufende Aussparung 201 eingebracht. Die Aussparung 201 verläuft kantenparallel mit Wänden 202 und 203 von unteren Rand des Sonotrodenkopfes 20 mit vorgegebener Breite, bildet Vorsprünge 204 und 205 im rechten Winkel und verläuft im mittleren Teil der Sonotrodenstirnfläche 200, d. h. im Bereich der Symmetrieachse II, mit geringerer Breite. Im oberen Teil der Sonotrodenstirnfläche 200 erweitet sich die Aussparung 201 entsprechend über rechte Winkel und verläuft wiederum kantenparallel zum oberen Rand des Sonotrodenkopres 20. Die Aussparung 201 ist also zur Umfangsfläche des Sonotrodenkopfes 20 hin offen.

Für unterschiedliche betriebsmäßige Anwendungsfälle können die beidseitigen Vorsprünge 204 und 205 der Aussparung 201 unterschiedlich ausgebildet sein. Es wird somit jeweils eine erste Arbeitsfläche 206 und 207 für die Ultraschallverschweißung gebildet.

In der Aussparung 201 der Sonotrodenstirnfläche 200 ist ein Amboß 210 linear verschiebbar angeordnet. Dadurch daß die Aussparung 201 zum Rand des Sonotrodenkopfes 20 hin offen ist, kann der Amboß 210 als Schieber in der Ebene der Sonotrodenstirnfläche geführt werden. Der Amboß weist einen Vorsprung 211 auf, der mit seiner Breite auf die beidseitigen Vorsprünge 204 und 205 der Aussparung 201 abgestimmt ist. Es werden so am Amboß weitere Arbeitsflächen 212 und 213 für die Ultraschallverschweißung gebildet, die den Arbeitsflächen 206 und 207 der Aussparung 201 gegenüberliegen.

Insbesondere aus Fig 4 ist im einzelnen erkennbar, daß von der im Bereich der Aussparung 201 zurückversetzten Sonotrodenstirnfläche beidseitig je ein Verdichtungsraum 220 und 230 gebildet wird, der von fünf Flächen begrenzt ist. Dabei lassen sich die Arbeitsflächen 212 und 213 des Ambosses 210 verschieben, so daß wiederum die gleichzeitige Druckausübung mit der Ultraschalübertragung von der Sonotrodenarbeitsfläche auf Werkstücke möglich ist.

Zur Verwendung des oberen Teils der Aussparung 201 in der Sonotrodenstirnfläche 200 läßt sich der gesamte Sonotrodenkörper 2 um seine Mittelachse II um 180° verdrehen oder auch der Amboß 210 von oben in die Aussparung 201 einschieben.

Die Sonotroden gemäß den beiden beschriebenen Ausführungsbeispielen sind dafür vorgesehen, freie Enden von Drähten und/oder Litzen dauerhaft zu verbinden. Dabei ist vorteilhaft, daß die abgesetzte Stirnfläche der Sonotrode jeweils ein Anschlag für die Leitungsenden bildet. Dies läßt sich beispielsweise bei Drähten, bei denen die Enden rechtwinklig abgebogen und die in Fig 3 mit 250 bezeichnet sind, anwenden. Es kann dabei vorteilhaft sein, daß die Arbeitsflächen für die Ultraschallverschweißung in der Aussparung der Sonotrodenstirnfläche einerseits und/oder am Amboß andererseits gegenüber der Sonotrodenachse einen Winkel bilden, und zwar derart, daß zur Sonotrodenstirnfläche ein größerer Einlegebereich gebildet wird. Dadurch ergibt sich auch eine bessere Anpassung des Verschweißquerschnittes an den Ausgangsquerschnitt der einzelnen Drähte und/oder Litzen.

In Fig 5 und Fig 6 hat ein Sonotrodenkörper 3 eine Sonotrodenachse III und einen Sonotrodenkopf 30. Der Sonotrodenkopf 30 hat eine Stirnfläche, in der eine Aussparung 301 in etwa von der Mitte über den gesamten oberen Bereich verläuft. Es wird also in diesem Fall eine Stufe mit einer Arbeitsfläche 302 gebildet. In der Stufe 301 ist ein stufenförmig ausgebildeter Amboß 310 verschiebbar angeordnet, so daß seine untere Fläche 311 der Fläche 302 gegenüberliegt. Beide Flächen 302 und 311 sind vorteilhafterweise konvex über die Stirnfläche 300 ausgebildet, so daß sich bei Berührung der Arbeitsflächen 302 und 311 im

Bereich der Sonotrodenachse III beidseitig ein Freiraum ergibt.

Insbesondere aus Fig 5 ist ersichtlich, daß durch die Stufe 301 in der Sonotrodenstirnfläche 300 mit ihrer Rückseite 303 und der Arbeitsfläche 302 zusammen mit der innenliegenden Arbeitsfläche 311 und der abgesetzten Fläche 312 des Ambosses 310 ein Verdichtungsraum 320 gebildet wird, der von vier Flächen begrenzt ist. In den Verdichtungsraum 320 lassen sich vorteilhaft Drähte und/oder Litzen 350 mit deren Enden längs einlegen. Es ist somit eine Verschweißung von längsgeführten Leitungen ohne Abknicken der Leitungsenden möglich.

Bei den bereits beschriebenen Ausführungsbeispielen ist es weiterhin sinnvoll, in an sich bekannter Weise die Arbeitsflächen mit Konturen bzw. Profilierungen zu versehen. Damit kann die Verschweißwirkung, insbesondere bei Litzen mit einer Vielzahl von Einzeldrähten, verbessert werden.

Bei den beschriebenen Ausführungsbeispielen der Erfindung ist im Gegensatz zum Stand der Technik immer gewährleistet, daß die Relativbewegung von Sonotrode und Amboß in etwa mittig zur Sonotrodenachse erfolgt. Dadurch lassen sich störende Drehmomente weitgehend vermeiden. Es lassen sich nunmehr mit erfindungsgemäßen Werkzeugen kompakte Ultraschallschweißvorrichtungen aufbauen, die mit der Hand nach Art einer Bohrmaschine geführt werden können. Beim Einsatz an wechselnden Arbeitsorten ergibt sich somit die Möglichkeit, Drähte und/oder Litzen wesentlich schneller und wirtschaftlicher zu verschweißen.

**Patentansprüche**

1. Werkzeug einer Ultraschallschweißvorrichtung für metallische Werkstücke, insbesondere zum Verbinden von Drähten und/oder Litzen, bei welchem einer Sonotrode (1, 2, 3) als aktiver Schweißelektrode wenigstens ein Amboß (110, 210, 310) als Gegenelektrode zugeordnet ist, welche beide zur Bildung eines Verdichtungsraumes (120 ; 220, 230 ; 320) relativ zueinander bewegbar sind, wobei an der Sonotrode wenigstens eine Ausnehmung (101, 201, 301) vorhanden ist, dadurch gekennzeichnet, daß die Ausnehmung (101, 201, 301) als Vertiefung in der ansonsten ebenen Sonotrodenstirnfläche (100, 200, 300) ausgebildet ist, in welcher der Amboß (110, 210, 310) einen linear bewegbaren Schieber bildet, wobei der Verdichtungsraum (120 ; 220, 230 ; 320) zumindest von einer Fläche quer zur Schwingungsrichtung der Sonotrode (1, 2, 3) begrenzt ist.

2. Werkzeug nach Anspruch 1, dadurch gekennzeichnet, daß die Ausnehmung (101, 201) von parallelen Flächen (102, 103 ; 202, 203) begrenzt ist, zwischen denen der den Schieber bildende Amboß (110, 210) weitgehend formschlüssig geführt ist.

3. Werkzeug nach Anspruch 1 und Anspruch 2, dadurch gekennzeichnet, daß die Vertiefung in der Sonotrodenstirnfläche (100, 200) zusammen mit dem Amboß (110, 210) einen von fünf Flächen begrenzten Verdichtungsraum (120, 220) für Draht- und/oder Litzenenden (150, 250) bildet.

4. Werkzeug nach Anspruch 3, dadurch gekennzeichnet, daß die Arbeitsflächen (104, 111 ; 206, 207, 212, 213) in der Vertiefung der Sonotrodenstirnfläche (100, 200) und/oder Amboß (110, 210) gegenüber der Sonotrodenachse (I, II) einen Winkel bilden derart, daß zur Ebene der Sonotrodenstirnfläche (100, 200) ein größerer Einlegebereich als in der Vertiefungsebene gebildet wird.

5. Werkzeug nach Anspruch 1, dadurch gekennzeichnet, daß die Ausnehmung zum Umfang des Sonotrodenkopfes (20, 30) hin offen ist und in dieser Ausnehmung der als Schieber ausgebildete Amboß (210, 310) weitgehend formschlüssig geführt ist.

6. Werkzeug nach Anspruch 1, dadurch gekennzeichnet, daß die Ausnehmung in an sich bekannter Weise eine Stufe im umfangsseitigen Bereich des Sonotrodenkopfes (30) bildet, wobei die einander zugeordneten Arbeitsflächen (302, 311) von Sonotrodenkopf (30) und/oder Amboß (310) konvex ausgebildet sind.

7. Werkzeug nach Anspruch 6, dadurch gekennzeichnet, daß die Arbeitsflächen (302, 303, 311, 312) von Sonotrodenkopf (30) und Amboß (310) einen von vier Flächen begrenzten Verdichtungsraum für durchgehende Drähte und/oder Litzen (350) bildet, der einen ungleichförmigen Querschnitt aufweist.

8. Werkzeug nach einem der vorhergehenden Ansprüche, dadurch gekennzeichnet, daß die Arbeitsflächen (104, 111 ; 204, 205, 212, 213 ; 302, 311) im Sonotrodenkopf (10, 20, 30) und/oder Amboß (110, 210, 310) profiliert sind.

**Claims**

1. A tool of an ultrasonic welding device for metallic workpieces, in particular for connecting wires and/or wire strands, wherein a sonotrode (1, 2, 3) acting as an active welding electrode is assigned at least one anvil (110, 210, 310) as its counter-electrode, both of which can be moved relative to one another so as to form a compression space (120 ; 220, 230 ; 320), wherein the sonotrode is provided with at least one recess (101, 201, 301), characterised in that the recess (101, 201, 301) consists of a cavity in the otherwise flat sonotrode end face (100, 200, 300), in which the anvil (110, 210, 310) forms a linearly movable slide, where the compression space (120 ; 220, 230, 320) is delimited by at least one surface extending transversely to the oscillating direction of the sonotrode (1, 2, 3).

2. A tool as claimed in Claim 1, characterised in that the recess (101, 201) is delimited by parallel surfaces (102, 103 ; 202, 203) between which the anvil (110, 210), which forms the slide, is guided largely by its shape.

3. A tool as claimed in Claim 1 and 2, characterised in that the cavity in the sonotrode end face (100, 200), together with the anvil (100, 210), forms a compression space (120, 220), delimited by five surfaces, for the ends of wires and/or wire strands (150, 250).

4. A tool as claimed in Claim 3, characterised in that the working surfaces (104, 111 ; 206, 207, 212, 213) in the cavity in the sonotrode end face (100, 200) and/or anvil (110, 210) form an angle with the sonotrode axis (I, II) which is such that a larger insertion zone is formed in the plane of the sonotrode end face (100, 200) than in the cavity plane.

5. A tool as claimed in Claim 1, characterised in that the recess is open to the periphery of the sonotrode head (20, 30) and in this recess the anvil (210, 310), which is in the form of a slide, is guided largely by its shape.

6. A tool as claimed in Claim 1, characterised in that in a manner known per se the recess forms a step in the peripheral zone of the sonotrode head (30), where the oppositely facing working surfaces (302, 311) of sonotrode head (30) and/or anvil (310) are of convex formation.

7. A tool as claimed in Claim 6, characterised in that the working surfaces (302, 303, 311, 312) of sonotrode head (30) and anvil (310) form a compression space, delimited by four surfaces, for wires and/or strands (350) passing through the compression space, which has a non-uniform cross-section.

8. A tool as claimed in one of the preceding Claims, characterised in that the working surfaces (104, 111 ; 204, 205, 212, 213 ; 302, 311) in the sonotrode head (10, 20, 30) and/or anvil (110, 210, 310) are profiled.

**Revendications**

1. Outil d'un dispositif de soudage par ultrasons pour des pièces à traiter métalliques, notamment pour la liaison de fils et/ou de torons, et dans lequel à une sonotrode (1, 2, 3) utilisée en tant qu'électrode active de soudage se trouve associée au moins une enclume (110, 210, 310) formant contre-électrode, ces deux électrodes pouvant être déplacées l'une par rapport à l'autre de manière à former un espace de compression (120 ; 220, 230 ; 320), la sonotrode comportant au moins un évidement (101, 201, 301), caractérisé par le fait que l'évidement (101, 201, 301) est réalisé sous la forme d'un renfoncement situé dans la surface frontale par ailleurs plane (100, 200, 300) de la sonotrode, dans laquelle l'enclume (110, 210, 310) forme un poussoir déplaçable linéairement, l'espace de compression (120 ; 220, 230 ; 320) étant limité au moins par une surface disposée transversalement par rapport à la direction de vibration de la sonotrode (1, 2, 3).

2. Outil suivant la revendication 1, caractérisé par le fait que l'évidement (101, 201) est limité par des surfaces parallèles (102, 103 ; 202, 203), entre lesquelles l'enclume (110, 210), qui constitue le poussoir, est guidée dans une large mesure selon une liaison par formes complémentaires.

3. Outil suivant les revendications 1 et 2, caractérisé par le fait que le renfoncement ménagé dans la face frontale (100, 200) de la sonotrode forme, avec l'enclume (110, 210), un espace de compression (120, 220), limité par cinq surfaces, pour les extrémités (150, 250) des fils et/ou des torons.

4. Outil suivant la revendication 3, caractérisé par le fait que les surfaces de travail (104, 111 ; 206, 207, 212, 213) présentes dans le renfoncement de la surface frontale (100, 200) de la sonotrode et/ou de l'enclume (110, 210) font, par rapport à l'axe (I, II) de la sonotrode, un angle tel qu'une zone d'insertion plus importante que dans le plan du renfoncement est formée en direction du plan de la surface frontale (100, 200) de la sonotrode.

5. Outil suivant la revendication 1, caractérisé par le fait que l'évidement est ouvert en direction du pourtour de la tête (20, 30) de la sonotrode et que l'enclume (210, 310) réalisée sous la forme d'un poussoir est guidée dans une large mesure selon une liaison par formes complémentaires dans cet évidement.

6. Outil suivant la revendication 1, caractérisé par le fait que l'évidement forme, de façon connue en soi, une partie étagée dans la zone circonférentielle de la tête (30) de la sonotrode, auquel cas les surfaces de travail (302, 311), qui sont tournées l'une vers l'autre, de la tête (30) de la sonotrode et/ou de l'enclume (310) possèdent une forme convexe.

7. Outil suivant la revendication 6, caractérisé par le fait que les surfaces de travail (302, 303, 311, 312) de la tête (30) de la sonotrode ou de l'enclume (310) forment un espace de compression pour les fils et/ou torons (350) traversants, qui est limité par quatre surfaces et possède une section transversale uniforme.

8. Outil suivant l'une des revendications précédentes, caractérisé par le fait que les surfaces de travail (104, 111 ; 204, 205, 212, 213 ; 302, 311) situées dans la tête (10, 20, 30) de la sonotrode et/ou dans l'enclume (110, 210, 310) sont profilées.

FIG 1

FIG 2

FIG 3

FIG 4

FIG 5

FIG 6